(19) Europäisches Patentamt
European Patent Office
Office européen des brevets

(11) Veröffentlichungsnummer: **0 226 078 B1**

(12) # EUROPÄISCHE PATENTSCHRIFT

(45) Veröffentlichungstag der Patentschrift: **28.06.89**

(51) Int. Cl.⁴: **C08G 63/60**

(21) Anmeldenummer: **86116264.2**

(22) Anmeldetag: **24.11.86**

(54) **Vollaromatische mesomorphe Polyester, deren Herstellung sowie Verwendung.**

(30) Priorität: **04.12.85 DE 3542814**

(43) Veröffentlichungstag der Anmeldung: **24.06.87 Patentblatt 87/26**

(45) Bekanntmachung des Hinweises auf die Patenterteilung: **28.06.89 Patentblatt 89/26**

(84) Benannte Vertragsstaaten: **BE CH DE FR GB IT LI LU NL SE**

(56) Entgegenhaltungen:
**EP-A- 0 139 303**
**US-A- 4 118 372**

(73) Patentinhaber: **BASF Aktiengesellschaft, Carl-Bosch-Strasse 38, D-6700 Ludwigshafen(DE)**

(72) Erfinder: **Kock, Hans-Jakob, Dr., Benckiserstrasse 63, D-6700 Ludwigshafen(DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Es wurden schon eine Reihe von vollaromatischen flüssig-kristallinen Polyestern beschrieben. Aus der US-PS 4 224 433 sind flüssig-kristalline Polyester bekannt, die aus Einheiten, die sich von 2,6-Dihydroxyanthrachinon, 3-Hydroxybenzoesäure, Terephthalsäure und/oder Isophthalsäure ableiten, bekannt. Die dort beschriebenen Polyester haben relativ hohe Schmelztemperaturen und sind nur bei Temperaturen über 300°C verarbeitbar. Darüber hinaus weisen sie Glasübergangstemperaturen Tg von < 130°C auf, wodurch die Wärmeformbeständigkeit beeinträchtigt wird.

In der US-PS 4 219 461 werden flüssig-kristalline Polyester beschrieben, aufgebaut aus Einheiten, die sich von 4-Hydroxybenzoesäure, 2,6-Hydroxynaphthalincarbonsäure, Hydrochinon und Terephthalsäure ableiten. Solche Polyester haben jedoch keine ausreichende Wärmeformbeständigkeit. Das gleiche gilt für die aus der DE-OS 3 325 705 bekannten flüssig-kristallinen Polyester, die aus Einheiten aufgebaut sind, die sich von 4-Hydroxybenzoesäure, Terephthalsäure und/oder Isophthalsäure sowie 2,7-Dihydroxynaphthalin und gegebenenfalls Hydrochinon ableiten.

Aus der EP 72540 sind auch aromatische Polyester auf Basis Terephthalsäure, p-Hydroxybenzoesäure und Hydrochinonen, die tertiäre Alkylreste mit mindestens 5 Kohlenstoffatome als Substituenten haben, bekannt. Solche Polyester sind jedoch erst bei Temperaturen oberhalb 300°C verarbeitbar. Über ihre Wärmeformbeständigkeit werden keine Aussagen gemacht.

Aus der US-A 4 118 372 sind anisotrope Polyester aus einer Vielzahl von Diphenolen Dicarbonsäuren und ggf. Hydroxycarbonsäuren bekannt, wobei u.a. auch die Komponenten a–d genannt sind. Allerdings wird ein Problem aus a, b, c und d nicht differenziert offenbart.

Es war deshalb die technische Aufgabe gestellt, vollaromatische flüssig-kristalline Polyester zu entwickeln, die niedrige Verarbeitungstemperaturen erlauben, jedoch gute Dauergebrauchseigenschaften bei erhöhter Temperatur haben und sich zudem durch eine geringe Eigenfarbe, glatte Oberfläche und gute Chemikalienbeständigkeit auszeichnen.

Diese Aufgabe wird gelöst durch vollaromatische Polyester, die unterhalb 300°C eine flüssig-kristalline fadenbildende Schmelze bilden, aufgebaut aus

a) 5 bis 35 Mol.% wiederkehrenden Einheiten der Formel I

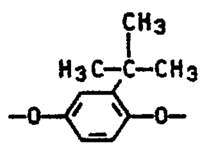

b) 3 bis 15 Mol.% wiederkehrenden Einheiten der Formel II

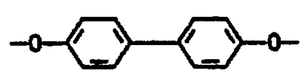 II

c) einer Summe aus a) und b) entsprechenden molaren Menge an wiederkehrenden Einheiten der Formel III

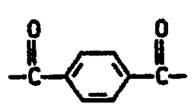 III

und

d) mindestens 10 Mol.% wiederkehrenden Einheiten der Formel IV

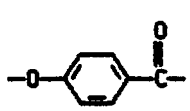 IV

wobei sich die Summe der molaren Anteile der Komponenten a, b, c und d jeweils auf 100 Mol.% ergänzt.

Die erfindungsgemäßen vollaromatisch flüssig-kristallinen Polyester haben den Vorteil, daß sie keiner hohen Verarbeitungstemperaturen bedürfen und darüber hinaus auch bei erhöhter Temperatur gute Dauergebrauchseigenschaften aufweisen. Ferner zeichnen sich die neuen vollaromatischen Polyester durch hohe Steifigkeit sowie Zähigkeit aus und haben eine glatte Oberfläche sowie eine geringe Eigenfarbe und gute Chemikalienbeständigkeit.

Der flüssig-kristalline Zustand der Polyester kann mit dem Polarisationsmikroskop nach einer in der

DE-AS 2 520 819 beschriebenen Methode nachgewiesen werden. Zwischen gekreuzten Polarisatoren weisen die Polyester schmelzen, die in einer Schichtdicke von 10 µm zwischen Glasplatten aufgetragen sind, Texturen auf, die einer mesomorphen (nematischen) Phase zugeordnet werden können.

Als Ausgangsverbindung der Formel I verwendet man t-Butylhydrochinon.

Als Ausgangsverbindung der Formel II verwendet man 4,4'-Dihydroxybiphenyl.

Als Ausgangsverbindung der Foprmel III verwendet man Terephthalsäure.

Als Ausgangsverbindung der Formel IV verwendet man p-Hydroxybenzoesäure.

In bevorzugten erfindungsgemäßen vollaromatischen Polyestern ist ein Teil der Einheiten b) ersetzt durch

e) wiederkehrenden Einheiten der Formel V

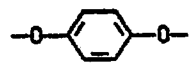

V

Eine geeignete Ausgangsverbindung ist Hydrochinon, und/oder

f) wiederkehrenden Einheiten der Formel VI

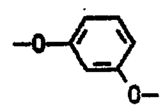

VI

Eine geeignete Ausgangsverbindung ist Resorcin, und/oder

g) wiederkehrenden Einheiten der Formel VII

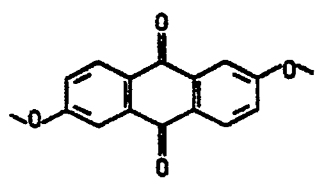

VII

Eine geeignete Ausgangsverbindung ist 2,6-Dihydroxyanthrachinon und/oder

h) wiederkehrenden Einheiten der Formel VIII

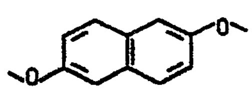

VIII

Als geeignete Ausgangsverbindung wird 2,6-Dihydroxynaphthalin verwendet.

In den bevorzugten Polyestern sind die Einheiten e), f) g) und/oder h) vorteilhaft in einer Menge von 5 bis 12 Mol.% enthalten. Ferner hat es sich als vorteilhaft erwiesen, wenn der molare Anteil an Einheiten a) 15 bis 25 Mol.% beträgt. In besonders vorteilhaften Polyestern beträgt der molare Anteil der Summe von a) sowie eine oder mehrere Einheiten e), f) und g) 25 bis 35 Mol.%.

Es versteht sich, daß auf die Summe der Hydroxyverbindungen jeweils die äquivalente Menge Terephthalsäure und/oder Isophthalsäure verwendet wird.

Bevorzugte vollaromatische flüssig-kristalline Polyester haben eine Glastemperatur von ≥ 160°C. Die Glastemperatur soll dabei gemessen werden mit der DSC-Methode, wie sie beschrieben ist von K.H. Illers und anderen in Makromolekulare Chemie 127 (1969), Seite 1 ff. Die vollaromatischen flüssig-kristallinen Polyester nach der Erfindung bilden bei ≤ 300°C. insbesondere < 280°C eine flüssig-kristalline fadenbildende Schmelze. Bevorzugt sind auch flüssig-kristalline Polyester, die bei einer Temperatur > 220 und < 280°C eine Teilkristallinität aufweisen.

Die erfindungsgemäßen Copolyester lassen sich erhalten durch eine Reihe von Techniken, wie sie beispielsweise in den US-PSen 4 375 530 und 4 118 372 erwähnt sind.

Besonders vorteilhaft erhält man die erfindungsgemäßen Polyester durch Umsetzen der vorgenannten Ausgangsstoffe in nicht derivatisierter Form unter Verwendung von Anhydriden niederer Fettsäuren, insbesondere Essigsäureanhydrid und gegebenenfalls unter Mitverwendung von Katalysatoren bei erhöhter Temperatur. Hierbei werden die trockenen Ausgangsverbindungen zusammen mit überschüssigem Fettsäureanhydrid vorteilhaft einem mindestens 5 %igen molaren Überschuß, bezogen auf die vorhandenen Hydroxygruppen, in einer Inertgasatmosphäre auf Rückflußtemperatur erhitzt. Das Reaktionsgemisch wird dabei z.B. bis zu höchstens 5 Stunden, vorzugsweise bis zu 2 Stunden auf eine Temperatur von 150 bis 200°C gehalten, anschließend wird die Temperatur z.B. innerhalb von 2 bis 2 1/2 Stunden auf 300 bis 350°C gesteigert. Essigsäureanhydrid und Essigsäure werden abdestilliert. Zur Vervollständigung der Reaktion ist es zweckmäßig, gegen Ende der Kondensation vermindertem Druck

z.B. bis 5 bis 20 mbar anzuwenden.

Bemerkenswert und nicht vorherzusehen bei der Anwendung von einer einzigen Reaktionsstufe ist zunächst die problemlose und vollständige Reaktion auch ohne Katalysatorzusatz zu den gewünschten Polymeren in einer relativ kurzen Zeit. Dies ist umso bemerkenswerter als durch die Vielzahl chemisch unterschiedlicher Hydroxygruppen eine Abstufung der Reaktivitäten und damit ein mangelhafter polymerer Aufbau zu erwarten wäre.

Die so erhaltenen vollaromatischen flüssig-kristallinen Polyester können in festem Zustand z.B. bei Temperaturen von 150 bis 250°C weiter kondensiert werden bis zur gewünschten Viskosität. Diese Nachkondensation in fester Phase kann sowohl vor als auch nach einer thermoplastischen Verarbeitung erfolgen.

Die erfindungsgemäßen vollaromatischen flüssig-kristallinen Polyester eignen sich zur Herstellung von Fäden, Folien, Schäumen und technischen Formteilen durch Spritzguß oder Extrusion.

Die Erfindung sei an folgenden Beispielen veranschaulicht.

Beispiel 1

0,2 mol Terephthalsäure, 0,26 mol 4-Hydroxybenzoeäure, 0,16 ml t-Butylhydrochinon, 0,04 ml 4,4'-Dihydroxybiphenyl sowie 0,86 mol Essigsäureanhydrid werden in einem Kolben mit Rührer, Stickstoffeinleitung und einem Destillationsaufsatz eingewogen und unter $N_2$-Atmosphäre in einem Metallbad auf 100°C erhitzt. Die Temperatur wird dann in 30' auf 150°C, in weiteren 100' auf 200°C und anschließend in 120' auf die Endtemperatur von 325°C erhöht.

Anschließend wird der Druck auf 560 mbar und dann alle 10' auf die Hälfte verringert. Man erhält so eine hochviskose, fadenbildende Schmelze. Polymerschmelze und erstarrtes Polymere zeigen einen perlmuttartigen Glanz. Aus DSC-Messungen ergibt sich eine Glastemperatur von 164°C. Die inhärente Viskosität beträgt 1,6 dl/g, gemessen in 0,1 gew.%iger Lösung in Pentafluorphenol bei 60°C. Das Polymerisat bildet bei 280°C eine fadenbildende flüssig-kristalline Schmelze.

Vergleichsbeispiel 1

0,2 mol Terephthalsäure, 0,26 mol 4-Hydroxybenzoesäure, 0,04 mol 4,4'-Dihydroxybiphenyl, 0,16 mol Methylhydrochinon sowie 0,86 mol Essigsäureanhydrid werden wie in Beispiel 1 beschrieben kondensiert. Die Endtemperatur beträgt 315°C, das Endvakuum beträgt 20 mbar.

Die DSC-Messungen ergeben eine Glastemperatur von 93°C und einen Schmelzpunkt von > 300°C. Das Produkt ist spröde, nicht-fadenbildend und zeigt bei der Verarbeitung eindeutige Zersetzungsprozesse.

Beispiel 2

0,18 mol Terephthalsäure, 0,02 mol Isophthalsäure, 0,26 mol p-4-Hydroxybenzoesäure, 0,16 mol t-Butylhydrochinon, 0,04 mol 4,4'-Dihydroxybiphenyl, sowie 0,86 mol Essigsäureanhydrid werden, wie in Beispiel 1 beschrieben, kondensiert. Die Endtemperatur beträgt 315°C. Das erhalten Polymere ist hochviskos und fadenbildend. Aus DSC-Messungen ergibt sich eine Glastemperatur von 165°C. Die inhärente Viskosität beträgt 0,9 dl/g. Das Polymere bildet bei 290°C eine flüssig-kristalline fadenbildende Schmelze.

Beispiel 3

0,2 mol Terephthalsäure, 0,26 mol 4-Hydroxybenzoesäure, 0,09 mol t-Butylhydrochinon, 0,07 mol Hydrochinon, 0,04 mol 4,4'-Dihydroxybiphenyl sowie 0,86 mol Essigsäureanhydrid werden wie in Beispiel 1 beschrieben, kondensiert. Die Endtemperatur beträgt 325°C. Das Endvakuum beträgt 30 mbar. Das erhaltene Polymere ist hochviskos und fadenbildend. Die DSC-Diagramme zeigen eine Glastemperatur von 160°C sowie einen endothermen Schmelzpunkt bei 260°C. Die inhärente Viskosität beträgt 1,1 dl/g. Das Polymere läßt sich bei einer Temperatur von 290°C aus der SChmelze verarbeiten.

Beispiel 4

0,2 mol Terephthalsäure, 0,26 mol 4-Hydroxybenzoesäure, 0,16 mol t-Butylhydrochinon, 0,02 mol 4,4'-Dihydroxybiphenyl, 0,02 mol 2,6-Dihydroxyanthrachinon, sowie 0,86 mol Essigsäureanhydrid werden, wie in Beispiel 1 beschrieben, kondensiert. Die Endtemperatur beträgt 330°C. Das erhaltene Polymere ist hochviskos und fadenbildend. Aus DSC-Messungen ergibt sich eine Glastemperatur von 160°C. Die inhärente Viskosität beträgt 1,5 dl/g. Das Polymere läßt sich bei einer Temperatur von 260°C aus der Schmelze verarbeiten.

**Patentansprüche**

1. Vollaromatische Polyester, die unterhalb von 300°C eine flüssig-kristalline fadenbildende Schmelze bilden, aufgebaut aus

a) 5 bis 35 Mol.% wiederkehrenden Einheiten der Formel I

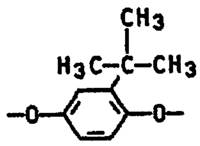

I

b) 3 bis 15 Mol.% wiederkehrenden Einheiten der Formel II

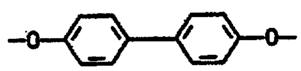

II

c) einer der Summe aus a) und b) entsprechenden molaren Menge an wiederkehrenden Einheiten der Formel III

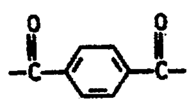

III

und

d) mindestens 10 Mol.% wiederkehrenden Einheiten der Formel IV

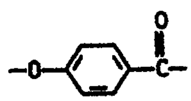

IV

wobei sich die Summe der molaren Anteile der Komponenten a, b, c und d jeweils auf 100 Mol.% ergänzt.

2. Vollaromatische Polyester nach Anspruch 1, <u>in denen zusätzlich</u> ein Teil der Einheiten b) ersetzt ist durch mindestens eine der Einheiten

e)

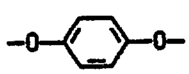

V

f)

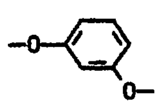

VI

g)

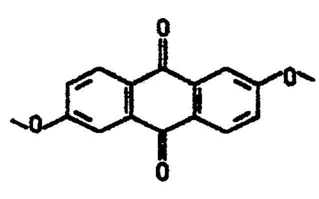

VII

h)

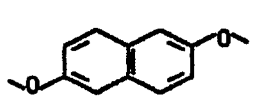

VIII

Wobei die Menge einer oder mehrerer Einheiten e), f), g) und/oder h) 5 bis 12 Mol.% beträgt.

3. Vollaromatische Polyester nach den Ansprüchen 1 bis 2, in denen der molaren Anteil an Einheiten a)

15 bis 25 Mol.% beträgt.

4. Vollaromatische Polyester nach den Ansprüchen 1 bis 3, in denen ein Teil der Einheiten c) ersetzt ist durch Einheiten der Formel IX

i)

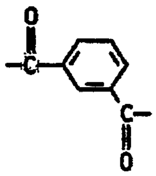

IX

5. Vollaromatische Polyester nach den Ansprüchen 1 bis 4, mit einer Glasübergangstemperatur Tg von ≥ 160°C haben.

6. Verfahren zur Herstellung von Polyestern nach den Ansprüchen 1 bis 5, dadurch gekennzeichnet, daß die Monomeren als nicht derivatisierte Hydroxy- bzw. Carboxyverbindung eingesetzt werden und unter Zusatz von Fettsäureanhydriden bei einer Temperatur von 150 bis 350°C in einer einzigen Reaktionsstufe unter Abdestillieren von Fettsäure und Fettsäureanhydrid umgesetzt werden.

7. Verfahren nach Anspruch 6, dadurch gekennzeichnet, daß man den so erhaltenen Polyester in fester Phase bei einer Temperatur von 150 bis 250°C nachkondensiert.

8. Verwendung von vollaromatischen Polyestern nach den Ansprüchen 1 bis 5 zur Herstellung von Fasern, Folien und Formteilen sowie Überzügen.

## Revendications

1. Polyesters totalement aromatiques qui, en dessous de 300°C, forment une masse fondue liquide – cristalline pouvant être filée, constitués de:

a) 5 à 35% molaires d'unités récurrentes de la formule I

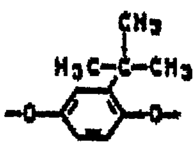

I,

b) 3 à 15% molaires d'unités récurrentes de la formule II

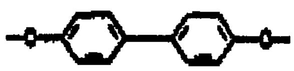

II,

c) une proportion molaire correspondant à la somme de a) et de b) d'unités récurrentes de la formule III

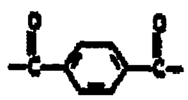

III

et

d) au moins 10% molaires d'unités récurrentes de la formule IV

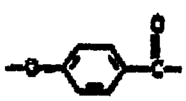

IV,

la somme des proportions molaires des composants a, b, c et d étant égale à 100% molaires.

2. Polyesters totalement aromatiques suivant la revendication 1, dans lesquels une partie des unités b) est remplacée par une ou plusieurs des unités

e)

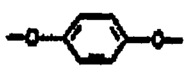

V,

f)

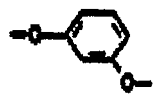

VI,

g)

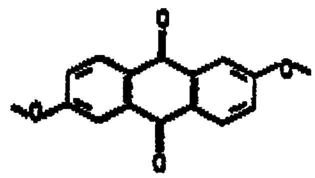

VII,

h)

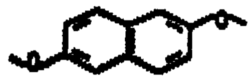

VIII,

la proportion totale de cette unité ou de ces unités e), f), g) et (ou) h) étant comprise entre 5 et 12% molaires.

3. Polyesters totalement aromatiques suivant les revendications 1 et 2, dans lesquels la proportion molaire des unités a) est comprise entre 15 et 25% molaires.

4. Polyesters totalement aromatiques suivant les revendications 1 à 3, dans lesquels une partie des unités c) est remplacée par des unités de la formule IX

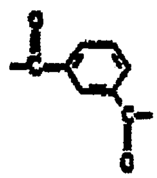

IX.

5. Polyesters totalement aromatiques suivant les revendications 1 à 4, dont la température de transition vitreuse $T_g$ est égale ou supérieure à 160°C.

6. Procédé de préparation de polyesters suivant les revendications 1 à 5, caractérisé en ce que l'on met en œuvre les monomères en tant que composé hydroxylés ou carboxylés non dérivés et on les fait réagir à une température comprise entre 150 et 350°C, en présence d'anhydrides d'acides gras, en un seul stade opératoire avec élimination par distillation d'acide gras et d'anhydride d'acide gras.

7. Procédé suivant la revendication 6, caractérisé en ce que le polyester formé est soumis dans la phase solide à une post-condensation entre 150 et 250°C.

8. Utilisation des polyesters totalement aromatiques suivant les revendications 1 à 5 pour la production de fibres, de feuilles, d'objets moulés ou de revêtements.

**Claims**

1. A wholly aromatic polyester which forms a liquid-crystalline fiber-forming melt below 300°C and is composed of

a) from 5 to 35 mol % of repeat units of the formula I

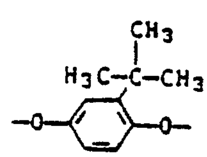

I

b) from 3 to 15 mol % of repeat units of the formula II

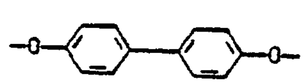

II

c) a molar amount corresponding to the total amount of a) and b) of repeat units of the formula III

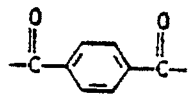

III

and

d) not less than 10 mol % of repeat units of the formula IV

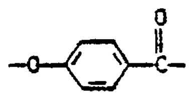

IV

the molar proportions of components a, b, c and d adding up to 100 mol % in each case.

2. A wholly aromatic polyester as claimed in claim 1, in which, in addition, some of the units b) are replaced by one or more of the units

e)

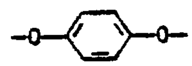

V

f)

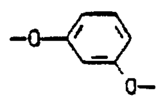

VI

g)

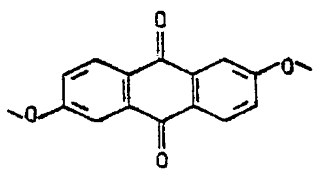

VII

h)

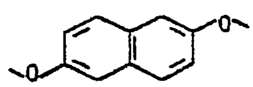

VIII

the amount of one or more units e), f), g) and/or h) being from 5 to 12 mol %.

3. A wholly aromatic polyester as claimed in either of claims 1 and 2, in which the molar proportion of units a) is from 15 to 25 mol %.

4. A wholly aromatic polyester as claimed in any of claims 1 to 3, in which some of the units c) are replaced by units of the formula IX

i)

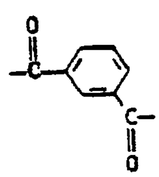

IX

5. A wholly aromatic polyester as claimed in any of claims 1 to 4, which has a glass transition temperature Tg of ≥ 160°C.

6. A process for preparing a polyester as claimed in any of claims 1 to 5 by reacting the monomers in the form of underivatized hydroxy and carboxy compounds at 150–350° in the presence of a fatty acid anhydride in a single reaction stage while distilling off fatty acid and fatty acid anhydride.

7. A process as claimed in claim 6, wherein the polyester thus obtained is postcondensed in the solid phase at 150–250°C.

8. Use of a wholly aromatic polyester as claimed in any of claims 1 to 5 form preparing fibers, films, moldings and surface coating materials.